Europäisches Patentamt

European Patent Office

Office européen des brevets

(11) Publication number: **0 384 554**
**A1**

## (12) EUROPEAN PATENT APPLICATION

(21) Application number: **90300036.2**

(22) Date of filing: **03.01.90**

(51) Int. Cl.5: **F16L 23/04, F16L 37/08, E21B 17/08**

(30) Priority: **21.02.89 US 312475**

(43) Date of publication of application:
**29.08.90 Bulletin 90/35**

(84) Designated Contracting States:
**DE FR GB NL**

(71) Applicant: **CAMERON IRON WORKS USA, INC.**
**13013 Northwest Freeway**
**Houston, Texas 77040(US)**

(72) Inventor: **Szymczak, Edward J.**
**4002 Cypress Hill**
**Spring, Texas 77388(US)**
Inventor: **Hynes, Joseph H.**
**5618 Hampton Ridge**
**Houston, Texas 77069(US)**

(74) Representative: **Smith, Norman Ian et al**
**F.J. CLEVELAND & COMPANY 40-43**
**Chancery Lane**
**London WC2A 1JQ(GB)**

(54) **Segmental tubular connectors.**

(57) A segmental connection between tubular members (A1, B1) including a first tubular member (A1) having a first external clamping configuration (12), a second tubular member (B1) having a second external clamping configuration (14), a plurality of segments (S1) having internal clamping configurations (16, 18) for mating with the first and second clamping configurations and fasteners (F1) for tightening the segments (S1) into clamping engagement with the external configurations of the tubular member (A1, B1) to secure them in end to end clamped engagement. One of the clamping configurations is tapered wedging shape.

FIG.2

## SEGMENTAL TUBULAR CONNECTORS

### Background

The present invention is related to apparatus for providing a connection between tubular members which have enlarged ends which are engaged by a plurality of segments supported by one of the members and in clamping engagement with the enlarged ends of both members.

U. S. Patent No. 4,606,557 discloses a connector which includes a ring secured below the flange of the upper tubular member and having a plurality of segments which are screw fed inwardly into engagement with the lower hub surface of the lower tubular member.

U. S. Patent No. 4,460,201 discloses a split ring connector which has a C shape in section with the two legs of the C being in position to engage the surfaces of the hubs of the tubular members and also includes a plurality of jack screws to move the split ring out of engagement with the hubs. A separate wedging type of element is used to secure and tighten the ends of the split ring.

U. S. Patent No. 4,014,567 discloses a tubular connector including a pressure actuated connecting element which is secured to one member and includes a plurality of cam members which engage the back side of a flange secured to the other member. It also suggests the use of an annular member supported by one member and which engages within an annular slot in a flange on the other member to act as an additional support to prevent undesired radial deformation of the connector housing.

U. S. Patent No. 4,012,059 discloses the use of segments supported from one tubular member which are manually moved into a groove in the second tubular member and then actuators move the members apart to cause the segments to move under a shoulder in the one tubular member to lock the members together.

U. S. Patent No. 4,479,669 discloses another type of tubular connection including threaded plugs positioned within the pin end and threaded outward into openings in the bell end to secure the members with respect to each other. Suitable orienting means is suggested to ensure registry of the bell openings with the plugs.

### Summary

The segments of the prevent invention which connect two tubular members in sealed end to end position are supported by one of the members and include means to tighten them into tight gripping engagement with the clamping configurations of both tubular members.

An object of the present invention is to provide an improved connection between tubular members which includes a plurality of segments and which segments do not interfere with the movement of the tubular members into position for clamping.

Another object is to provide an improved tubular connector in which the means supporting the connector segments also is used to tighten the engagement of the segments on the clamping configuration of the tubular members.

A further object is to provide an improved tubular connection in which the pivoting of the segments on their support means does not interfere with the release or tightening of the segments.

### Brief Description of the Drawings

FIGURE 1 is an elevation view of the connected ends of two tubular members and the segmental connection securing the members together.

FIGURE 2 is a partial sectional view illustrating the two tubular members being in end to end position with a suitable seal therebetween and with the segment supported from one member and in position to be tightened into engagement with the external end configuration of both members.

FIGURE 3 is another partial sectional view of a modified connection similar to that shown in FIGURE 2 after the segment has been tightened into clamping engagement with both tubular members.

FIGURE 4 is another sectional view of a modified form of segmental connection in supported position similar to that illustrated in FIGURE 2.

FIGURE 5 is another sectional view of another form of segmental connection in clamping position.

FIGURE 6 is another sectional view of a further form of segmental connection in clamping position.

FIGURE 7 is a similar sectional view of still another form of segmental connection in clamping position.

### Description of the Preferred Embodiments

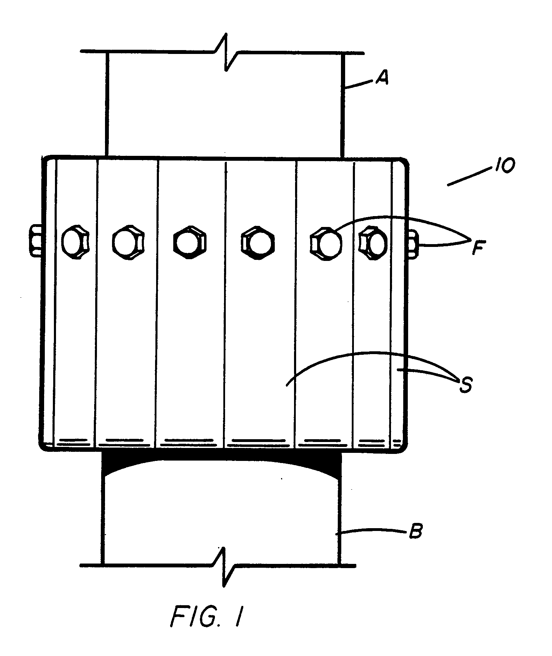

The improved segmental tubular connection 10 is illustrated generally in FIGURE 1 and provides a tight, sealing clamping engagement between the abutting ends of tubular member A and tubular member B. The clamping segments S are tightened into clamping engagement by the threaded fasteners F which extend through the upper portion of segments S and thread into the exterior portion of one of the tubular members. In the following description of the improved structures of the present invention the components shown in FIGURE 1 will all have the same letter designations followed by a numerical designation used with each letter designation for that embodiment of the invention. Thus, the letter will identify the element of the invention and the numerical suffix will identify the form of the invention in which it belongs. While the segments S as shown in FIGURE 1 are sufficiently wide and spaced so that their side edges are touching or very close together. It should be noted that there could be space between segments S provided the segments S provide sufficient force to hold the tubular members in tight sealing engagement.

In the first embodiment illustrated the enlarged ends of tubular member A1 and B1 are shown in abutting relationship with sealing ring R1 being positioned therein to provide the desired sealing. Segment S1 is shown supported on fastener F1. The exterior configuration of upper tubular member A1 includes shoulder 12 which tapers downwardly and outwardly. The exterior configuration of lower tubular member B1 includes the re-entrant shoulder 14 which tapers upwardly and inwardly. The interior configuration of segment S1 includes mating tapered surface 16 which is to engage shoulder 12 and mating tapered surface 18 which is to engage shoulder 14. Fastener F1 extends through opening 20 in segment S1 and threads into upper tubular member A1 at a position below shoulder 12. Nut 22 is provided on the exterior of segment S1 and fastener F1 extends therethrough. Nut 22 is used to provide the fastening force against the exterior of segment S1.

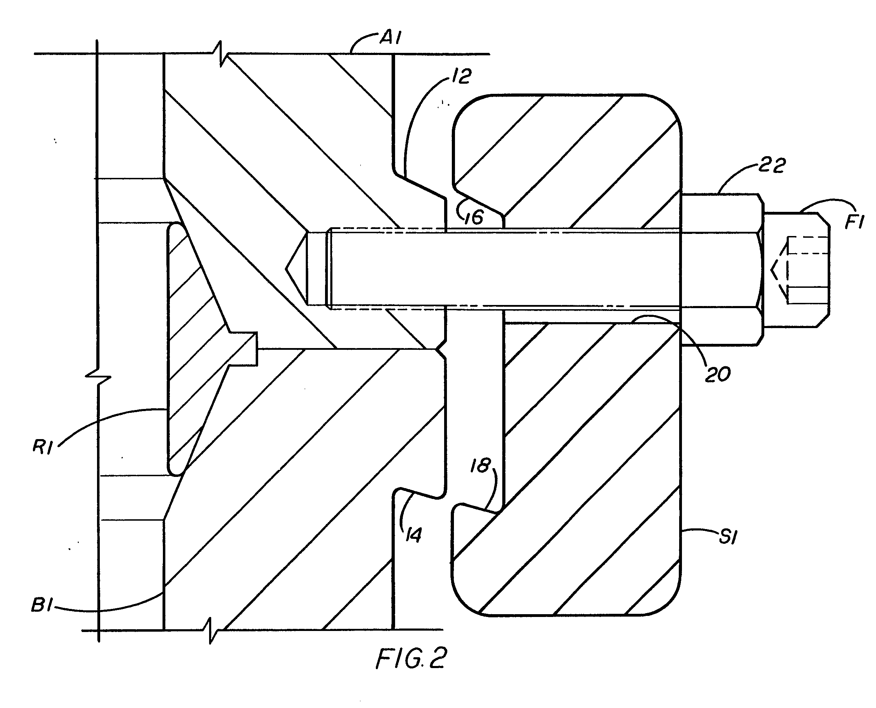

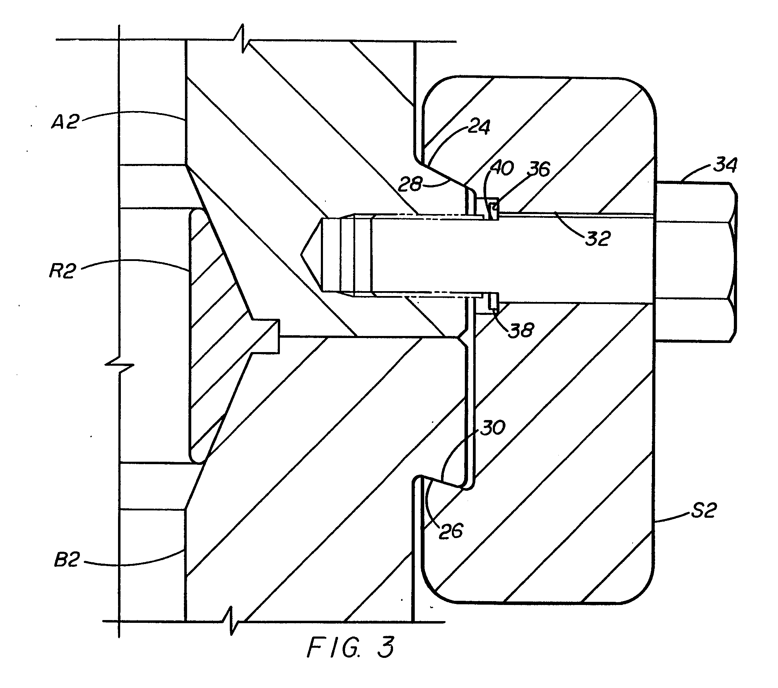

The connection illustrated in FIGURE 3 is sufficiently similar to that shown in FIGURE 2 to illustrate the clamping engagement of the segments in the FIGURE 2 connection. In FIGURE 3 tubular member A2 is shown clamped to tubular member B2 by the segment S2. Tubular member A2 has shoulder 24 which tapers downwardly and outwardly and tubular member B2 has re-entrant shoulder 26 which tapers upwardly and inwardly. Segment S2 includes upper surface 28 which is in mating engagement with shoulder 24 and lower surface 30 which is in mating engagement with shoulder 26. Fastener F2 which extends through opening 32 in segment S2 has been tightened to secure segment in clamping engagement with shoulders 24 and 26. Segment S2 is modified from segment S1 in that it includes recess or counterbore 36 around the inner end of opening 32 and snap ring 38 is secured around fastener shank 40 so that on unthreading of fastener S2 snap ring 38 engages recess 36 and causes segment S2 to move outward from members A2 and B2 and thereby ensure disengagement of segment S2.

In the embodiments illustrated in FIGURES 2 and 3, the diameter of openings 20 and 32 are sufficient to allow axial movement of segment as it is tightened or release to engage and disengage from re-entrant shoulders 14 and 26. Additionally, the openings in segments in the other embodiments are provided with sufficient diameter to allow the movement of segments into engagement with the enlarged areas of the tubular members and to be tightened thereon so that the tubular members are forced together to ensure that they engage their sealing ring with sufficient force for establishing a sealing between the ends of the tubular members.

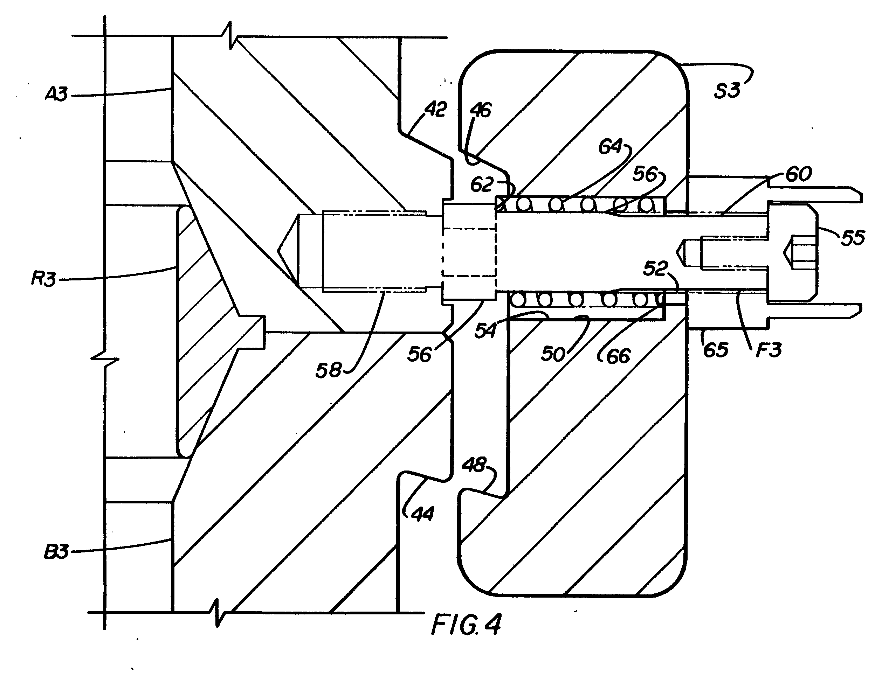

The connection illustrated in FIGURE 4 is similar to those already shown and includes segment S3 which clamps tubular member A3 to B3 by the engagement of shoulder 42 on member A3 and re-entrant shoulder 44 on B3 by surfaces 46 and 48 on segment S3. Opening 50 through segment S3 includes bore 52 and counterbore 54. Fastener F3 includes head portion 55 and shank portion 56 having threaded inner end 58, threaded outer end 60 and outwardly facing shoulder 62. Spring 64 is positioned between shoulder 62 and shoulder 66 formed by the inner end of counterbore 54. Nut 68 is threaded onto the outer threaded portion 60 and head portion is secured into shank portion 56 and the under surface of head portion 55 engaged the shoulder on nut 68 as shown. Spring 64 functions to urge segment S3 outwardly from shoulder 62 and to maintain its lower portion out of engagement with the end of tubular member B3 as member A3 is being moved into abutting relationship therewith. Tightening of segment S3 into its engaged position is accomplished by tightening nut 68.

In the form of connection illustrated in FIGURE 5 tubular member A4 has square or radial re-entrant shoulder 70 and tubular member B4 includes tapered shoulder 72. Segment S4 includes upper re-entrant shape 74 for engagement with shoulder 70 and lower tapered surface 76 for engagement with shoulder 72. Fastener F4 extends through opening 78 in segment S4 and threads into member B4. Washer 80 is positioned in recess 82 on the exterior of segment S4 and spherical washer 84 is positioned below the head of fastener and to have its spherical surface in engagement with the upper spherical surface of washer 80. This use of washers 80 and 84 allows segment S4 to be tilted during tightening by virtue of it being in initial engagement with shoulder 70. This allows the wedging actions of surface 76 on shoulder 72 to exert the clamping force on the tubular members A4 and B4.

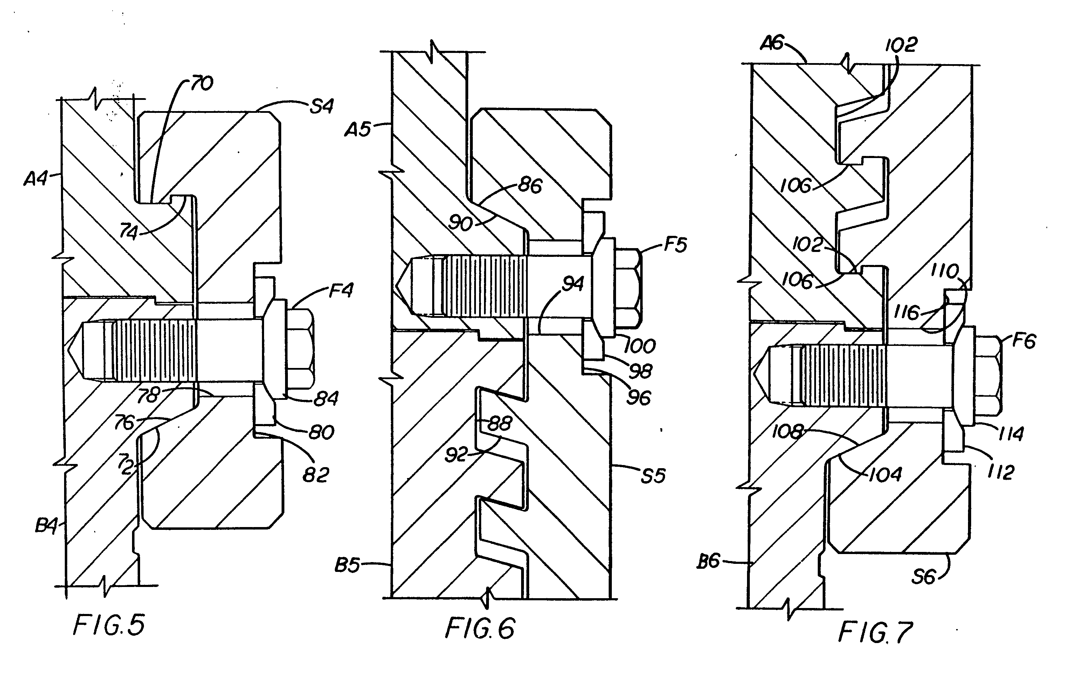

The connection shown in FIGURE 6 is similar to that shown in FIGURE 5 but illustrating tapered shoulder 86 on upper tubular member A5 and re-entrant grooves 88 on lower tubular member B5. Segment S5 includes upper tapered surface 90 mating with shoulder 86 and lower teeth 92 mating with grooves 88. Fastener F5 extends through opening 94 in segment S5 and is threaded into member A5. Washer 98 and spherical washer 100 are positioned between the head of fastener F5 and recess 96 to allow for the tilting of segment S5 during tightening and allow for engagement within the re-entrant grooves 88.

The connection illustrated in FIGURE 7 is another form similar to those shown in FIGURES 5 and 6 and includes re-entrant grooves 102 on upper tubular member A6 and tapered shoulder 104 on lower tubular member B6. The interior of segment S6 is shaped to provide re-entrant teeth 106 for mating with grooves 102 and tapered surface 108 for mating with shoulder 104. Fastener F6 extends through opening 110 into threaded engagement with the upper end of lower tubular member B6. Washer 112 and spherical washer 114 are positioned between recess 116 and the head of fastener F6.

From the foregoing it can be concluded that the present invention provides engagement between the individual segments and the ends of the tubular members which includes one set of engaging tapered surfaces which are tapered to cause the tubular members to be wedged together and the other set of engaging surfaces may provide a type of re-entrant engagement. The angle of such re-entrant surfaces to the exterior of the tubular member should be a larger angle than the similar angle of the tapered surfaces so that the surfaces tend to converge outwardly of the axis. With this relationship, the clamping of the ends of the tubular members by the segments will provide a wedging force urging the ends of the tubular members toward each other into sealed engagement.

## Claims

1. A segmental connection between tubular members comprising a first tubular member having a first external clamping configuration, a second tubular member having a second external clamping configuration, a plurality of segments having an internal configuration for mating with said first and second external clamping configurations, and fastening means for securing said segments in clamping engagement with the ends of said tubular members.

2. A segmental connection according to claim 1 including means for urging said segments out of clamping engagement with said tubular members.

3. A segmental connection according to claim 2 wherein said urging means are springs.

4. A segmental connection according to claim 3 wherein said fastening means includes an outwardly facing shoulder, said segments each include an inwardly facing shoulder, and said springs each are positioned between said fastening means shoulder and said segment shoulder.

5. A segmental connection according to claim 1 including a snap ring on each of said fastening means positioned on to engage the inner surface of said segments.

6. A segmental connection according to claim 1 wherein said fastening means includes a fastener extending through each of said segments, and a nut threaded on each of said fastening means on the exterior of said segments.

7. A segmental connection according to claim 1 wherein said fastening means includes means for compensating for the tilting of the segments during tightening of the segments against the external configurations of the tubular members.

8. A segmental connection according to claim 7 wherein said compensating means includes a first washer having a concave spherical surface, a second washer having a convex spherical surface, said second washer having its convex surface engaging the concave surface of said first washer, and said washers are positioned around said fastening means between the head thereon and an outwardly facing surface on the segments.

9. A segmental connection according to claim 7 wherein one of said clamping configurations is a re-entrant shape and the other clamping configuration is a tapered wedging shape.

10. A segmental connection according to claim 9 wherein the angle of said re-entrant shape with respect to the axis of the tubular member is greater than the angle of said tapered wedging shape with respect to such axis.

11. A segmental connection according to claim 1 wherein said fastening means connect only to one of said tubular members.

FIG. I

FIG. 2

FIG. 3

FIG. 4

FIG.5

FIG.6

FIG.7

EP 0 384 554 A1

| | **DOCUMENTS CONSIDERED TO BE RELEVANT** | | EP 90300036.2 |
|---|---|---|---|

| Category | Citation of document with indication, where appropriate, of relevant passages | Relevant to claim | CLASSIFICATION OF THE APPLICATION (Int. Cl⁵) |
|---|---|---|---|
| X | DE - B2 - 2 065 571 (VETCO OFFSHORE INDUSTRIES INC) * Totality * | 1-3 | F 16 L 23/04 F 16 L 37/08 E 21 B 17/08 |
| X | DE - A - 2 042 938 (VETCO OFFSHORE INDUSTRIES INC) * Totality * | 1-3 | |
| Y | EP - A1 - 0 034 436 (HUNTING OILFIELD SERVICES) * Totality * | 1,2,4, 11 | |
| Y | US - A - 4 327 942 (ABBES) * Totality * | 1,2,4, 11 | |
| A | DE - B2 - 2 706 105 (MOTOREN- UND TURBINENUNION FRIEDRICHSHAFEN GMBH) * Totality * | 1,2,4 | **TECHNICAL FIELDS SEARCHED (Int Cl⁵)** |
| A | DE - A1 - 2 830 185 (THE ENGLISH ELECTRIC CO. LTD.) * Totality * | 1,2,4 | F 16 L 15/00 F 16 L 17/00 F 16 L 19/00 F 16 L 21/00 F 16 L 23/00 F 16 L 25/00 F 16 L 37/00 E 21 B 17/00 |

The present search report has been drawn up for all claims

| Place of search | Date of completion of the search | Examiner |
|---|---|---|
| VIENNA | 06-03-1990 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82